# EUROPEAN PATENT APPLICATION

(11) **EP 4 835 638 A1**
(43) Date of publication of application: **04.11.2026**
(21) Application number: 24910550.3
(22) Date of filing: 02.12.2024
(51) Int. Cl.: G06F 3/06

(54) **DATA READING METHOD FOR CHIP, AND CHIP, COMPUTER DEVICE, STORAGE MEDIUM AND COMPUTER PROGRAM PRODUCT**

(30) Priority: 26.12.2023 CN 202311809260
(71) Applicant: Moore Threads Technology Co., Ltd., Beijing 100036 (CN)
(72) Inventor: TAN, Yingran, Beijing 100036 (CN)
(74) Representative: Lavoix
(86) International application number: PCT/CN2024/136120
(87) International publication number: WO 2025/139618

(57) **Abstract**

Disclosed in the embodiments of the present disclosure are a data reading method for a chip, and a chip, a computer device, a storage medium and a computer program product. The method comprises: acquiring a data reading instruction, wherein the data reading instruction is used for instructing data reading to be performed according to reading information and data prefetching to be performed according to prefetching information; on the basis of the data reading instruction, acquiring a first data reading request, wherein the first data reading request includes the reading information and the prefetching information; sending the first data reading request to a cache module, so that in response to the first data reading request, the cache module reads and returns first target data according to the reading information, and pre-fetches and caches second target data according to the prefetching information; and receiving the first target data returned by the cache module. The embodiments of the present disclosure can reduce data request pressure between a request source and a cache module, compress a request bandwidth, improve the performance of a processor, and facilitate flexible control over a prefetching mode on a per-task basis, thereby better satisfying data reading requirements of tasks.

## Description

### CROSS-REFERENCE TO RELATED APPLICATION

The present application is based on and claims priority to a Chinese Application No. 202311809260.9, filed on Dec. 26, 2023 and entitled "Data Reading Method for a Chip, Chip, Computer Device, and Storage Media", the entire contents of which are incorporated herein by reference.

### TECHNICAL FIELD

The present disclosure relates to, but is not limited to, the field of computer technology, and particularly relates to a data reading method for a chip, a chip, a computer device, a storage medium and a computer program product.

### BACKGROUND

A cache is usually designed in the processor, so that the speed of data reading and writing can adapt to the computing speed of the computing module in the processor, thereby improving the system performance. In the related art, the processor mostly adopts data prefetching technology, in which future memory access is predicted, and an access request corresponding to the memory block is sent before explicit access, and data in the memory block is fetched into the cache in advance, so as to improve the hit rate of the cache. However, the data prefetching adopted in the related art will increase the data request pressure between the request source and the cache, affect other normal memory access requests, and some data prefetching schemes in the related art are difficult to flexibly control the prefetching.

### SUMMARY

In view of this, the embodiments of the present disclosure at least provide a data reading method for a chip, a chip, a computer device, a storage medium and a computer program product.

The technical solution of the embodiments of the present disclosure is realized as follows.

An embodiment of the present disclosure provides a data reading method for a chip, and the method includes:
acquiring a data read instruction, where the data read instruction indicates reading data according to reading information and prefetching data according to prefetching information;
acquiring a first data read request according to the data read instruction, where the first data read request includes the reading information and the prefetching information;
sending the first data read request to a cache to enable the cache to, in response to the first data read request, read and return first target data according to the reading information, and prefetch and store a second target data according to the prefetching information; and
receiving the first target data returned by the cache.

An embodiment of the present disclosure provides a data reading method for a chip, and the method includes:
receiving a first data read request sent by a request source, where the first data read request requests reading data according to reading information and prefetching data according to prefetching information;
acquiring the reading information and the prefetching information according to the first data read request;
reading first target data from a storage space of a cache and/or memory and returning the first target data to the request source based on the reading information; and
prefetching a second target data from the memory and storing the second target data into at least one cache unit of the cache based on the prefetching information.

An embodiment of the present disclosure provides a chip, and the chip includes a calculation module and a cache.

The calculation module is configured to: acquire a data read instruction, where the data read instruction indicates reading data according to reading information and prefetching data according to prefetching information; acquire a first data read request according to the data read instruction, where the first data read request includes the reading information and the prefetching information; send the first data read request to a cache to enable the cache to, in response to the first data read request, read and return first target data according to the reading information, and prefetch and store a second target data according to the prefetching information; and receive the first target data returned by the cache.

The cache is configured to: receive a first data read request sent by the calculation module, where the first data read request requests reading data according to reading information and prefetching data according to prefetching information; acquire the reading information and the prefetching information according to the first data read request; read first target data from a storage space of the cache and/or memory and return the first target data to the calculation module based on the reading information; and prefetch a second target data from the memory and store the second target data into at least one cache unit of the cache based on the prefetching information.

An embodiment of the present disclosure provides a computer device including a memory and a processor. The memory stores a computer program executable on the processor, and the computer program, when executed by the processor, implements some or all of the steps of the above method, or the processor includes the chip.

An embodiment of the present disclosure provides a computer-readable storage medium on which a computer program is stored, and the computer program, when executed by the processor, implements some or all of the steps of the above method.

An embodiment of the present disclosure provides a computer program product including a computer program or instructions, and the computer program or instructions, when executed by a processor, implement some or all of the steps of the above method.

In the embodiments of the present disclosure, a data read instruction is acquire, where the data read instruction indicates reading data according to reading information and prefetching data according to prefetching information, a first data read request is acquired according to the data read instruction, where the first data read request includes the reading information and the prefetching information; the first data read request is sent to a cache to enable the cache to, in response to the first data read request, read and return first target data according to the reading information, and prefetch and store a second target data according to the prefetching information; and the first target data returned by the cache is received. In this way, the request source of the data read request can send the prefetching information together with the data read request to the cache, and the data can be read and prefetched by a single data read request. Thus, on the one hand, the data request pressure between the request source and the cache can be reduced, the request bandwidth can be compressed, and the processor performance can be improved. On the other hand, data prefetching may be controlled by the prefetching information contained in the data read request, so that the prefetching mode can be flexibly controlled per task to meet the data reading requirement of each task.

It is to be understood that the above general description and the following detailed description are merely exemplary and explanatory, rather than limiting the technical solutions of the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to illustrate technical solutions of the present disclosure.
FIG. 1 is a schematic flow diagram of a data reading method provided by an embodiment of the present disclosure;
FIG. 2 is a schematic flow diagram of a data reading method provided by an embodiment of the present disclosure;
FIG. 3 is a schematic flow diagram of a data reading method provided by an embodiment of the present disclosure;
FIG. 4 is a schematic flow diagram of a data reading method provided by an embodiment of the present disclosure;
FIG. 5A is a schematic diagram of an implementation architecture of a data cache provided by an embodiment of the present disclosure;
FIG. 5B is a schematic diagram of interaction between modules in a data reading method provided by an embodiment of the present disclosure;
FIG. 5C is a schematic diagram of an implementation of a data read request carrying a prefetched data length provided by an embodiment of the present disclosure;
FIG. 6 is a schematic structural diagram of a composition of a chip provided by an embodiment of the present disclosure; and
FIG. 7 is a schematic diagram of a hardware entity of a computer device according to an embodiment of the present disclosure.

### DETAILED DESCRIPTION

In order to make the purpose, technical scheme and advantages of the present disclosure more clear, the technical solution of the present disclosure is further described in detail below in conjunction with the accompanying drawings and embodiments, and the described embodiments should not be regarded as limitations of the present disclosure, and all other embodiments obtained by ordinary skilled persons in the art without making creative efforts belong to the scope of protection of the present disclosure.

In the following description, the expression "some embodiments" describes a subset of all possible embodiments, but it will be understood that "some embodiments" may be the same subset or different subsets of all possible embodiments and may be combined with each other without conflict. The term "first/second/third" is merely to distinguish similar objects and does not represent a particular order of objects, it will be understood that "first/second/third" may be interchanged in a particular order or sequence where permitted to enable embodiments of the present disclosure described herein to be implemented in an order other than that illustrated or described herein.

Unless otherwise defined, all technical and scientific terms used herein have the same meaning as commonly understood by one skilled in the technical field to which the present disclosure belongs. The terminology used herein is for the purpose of describing the disclosure only and is not intended to limit the disclosure.

The embodiments of the present disclosure provide a data reading method that can be applied to a chip, can be executed by for example a cache in the chip. The chip may be, for example, at least one of a Central Processing Unit (CPU) chip, a Graphics Processing Unit (GPU) chip, a Data Processing Unit (DPU) chip, and the like. The chip may be applied into any suitable computer device, and the computer device may refer to a server, a notebook computer, a tablet computer, a desktop computer, a smart TV, a set-top box, a mobile device (e.g., a mobile phone, a portable video player, a personal digital assistant, a dedicated messaging device, a portable gaming device) and other device equipped with data processing capabilities.

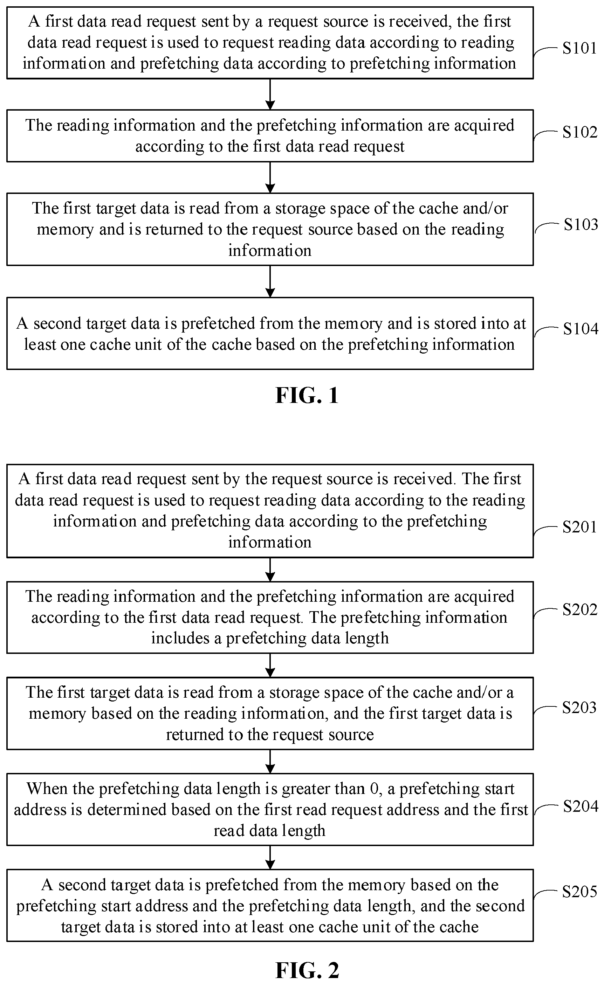

FIG. 1 is a schematic flowchart of an implementation of a data reading method provided by an embodiment of the present disclosure. As shown in FIG. 1, the method includes the following steps S101 to S104.

In step S101, a first data read request sent by the request source is received. The first data read request is used to request reading data according to reading information and prefetching data according to prefetching information.

In step S102, the reading information and the prefetching information are acquired according to the first data read request.

Here, the request source may include, but is not limited to, at least one of a computing module in a chip, an upstream cache of a cache currently to be read data, and the like.

In some embodiments, the first data read request may be received by a cache (denoted as a current cache) in the chip, and the request source may send at least one first data read request to the current cache as needed. For example, when the request source is the computing module, the computing module may generate a first data read request after parsing a data read instruction in the task, and send the first data read request to the cache. For another example, when the request source is the upstream cache of the current cache, the upstream cache may send at least one first data read request to the current cache according to the upstream data read request when the cache unit corresponding to the received upstream data read request missing.

In some embodiments, the first data read request may include reading information and prefetching information. After receiving the first data read request sent by the request source, the first data read request may be parsed to obtain reading information and prefetching information corresponding to the first data read request. Here, the reading information may include any suitable information indicating data reading, for example, the reading information may be, but is not limited to, at least one of a first read request address, a first read data length, and the like. The first read request address is a start address of data requested to be read corresponding to the first data read request. The first read data length is the length of data requested to be read. The prefetching information may include any suitable information indicating data prefetching, for example, the prefetching information may include, but is not limited to, at least one of whether to prefetch data, the length of prefetched data, and the like.

In implementation, the first data read request may be parsed according to any suitable parse method according to the actual situation, and the embodiment of the present disclosure is not limited thereto.

In some embodiments, the first data read request may include a read request address signal, a read data length signal, and a prefetching control signal. The read request address signal is parsed to obtain a first read request address, and the read data length signal is parsed to obtain the first read data length, and the prefetching control signal is parsed to obtain the prefetching information. In implementation, a correspondence relationship between multiple prefetching control signals and multiple pieces of prefetching information may be set in advance, and prefetching information corresponding to the prefetching control signal in the first data read request may be determined based on the correspondence relationship. The correspondence relationship between prefetching control signals and prefetching information can be set by the skilled in the art according to the actual situation, which is not limited in the embodiment of the present disclosure.

In some embodiments, the prefetching information includes a prefetching switch state indicating whether to perform data prefetching, and the prefetching switch state may be indicated by a value of the prefetching control signal. For example, when the prefetching control signal is 0'b0, the prefetching switch state may be determined to be an OFF state indicating not to perform data prefetching, and when the prefetching control signal is 0'b1, the prefetching switch state may be determined to be an ON state indicating to perform data prefetching. When the prefetching switch state is an on state indicating to perform data prefetching, the prefetching data length may be default or may be controlled by another signal, which is not limited here.

In some embodiments, the prefetching information includes a prefetching data length, which may be indicated by a value of the prefetching control signal. For example, when the prefetching control signal is 0'b0, the prefetching data length may be determined to be 0, and when the prefetching control signal is 0'b1, the prefetching data length may be determined to be one cache unit. For another example, when the prefetching control signal is 0'b00, the prefetching data length may be determined to be 0, and when the prefetching control signal is 0'b01, the prefetching data length may be determined to be one cache unit, and when the prefetching control signal is 0'b10, the prefetching data length may be determined to be two cache units, and when the prefetching control signal is 0'b11, the prefetching data length may be determined to be three cache units.

In some embodiments, the first data read request may include a request type signal, a read request address signal, and a read data length signal. The read request address signal may be parsed to obtain a first read request address, the read data length signal may be parsed to obtain a first read data length, and the request type signal may be parsed to obtain prefetching information. In implementation, a plurality of request type signals may be defined in advance, and request types indicated by different request type signals may correspond to different prefetching information. Thus, corresponding prefetching information may be determined based on the request type signal in the first data read request. Those skilled in the art may define an appropriate request type signal and a correspondence relationship between a request type indicated by each request type signal and the prefetching information according to the actual situation, which is not limited in the embodiment of the present disclosure.

In some embodiments, the prefetching information includes a prefetching switch state indicating whether to perform data prefetching, the request type may be indicated by a value of the request type signal, and the prefetching switch state may be determined according to the request type. For example, when the request type signal is 0'b101, it may be determined that the request type is a read-only type, that is, only data reading is performed and no data prefetching is performed, and the prefetching switch state is an off state indicating not to perform data prefetching. When the request type signal is 0'b110, it is determined that the request type is a type of reading together with prefetching, that is, data reading is performed and data prefetching is also performed, and the prefetching switch state is an on state indicating to perform data prefetching.

In some embodiments, the prefetching information includes a prefetching data length, the request type may be indicated by a value of the request type signal, and the prefetching data length may be determined according to the request type. For example, when the request type signal is 0'b101, it is determined that the request type is a read-only type, and the prefetching data length is determined to be 0, and when the request type signal is 0'b110, it is determined that the request type is a type of read and prefetching one cache unit, and the prefetching data length is determined to be one cache unit, and when the request type signal is 0'b111, it is determined that the request type is a type of read and prefetching four cache units, and the prefetching data length is determined to be four cache units.

In step S103, first target data is read from a storage space of the cache and/or memory based on the reading information, and the first target data is returned to the request source.

Here, hit detection may be performed on a cache unit in the storage space of the cache based on the reading information, and if the cache unit corresponding to the reading information hits, first target data may be obtained from the cache unit, and if the cache unit corresponding to the reading information is missing, the first target data is acquired from the memory based on the reading information.

In some embodiments, when the reading information includes the first read request address and the first read data length, hit detection may be performed on a cache unit in the storage space of the cache based on the first read request address and the first read data length. If the cache unit corresponding to the first read request address and the first read data length hits, the first target data may be obtained from the cache unit. If the cache unit corresponding to the first read request address and the first read data length is missing, the first target data is acquired from the memory based on the first read request address and the first read data length.

In step S104, a second target data is prefetched from the memory based on the prefetching information, and the second target data is stored into at least one cache unit of the cache.

Here, a prefetching start address and a prefetching data length may be determined based on the prefetching information, and the second target data may be prefetched from the memory based on the prefetching start address and the prefetching data length, and the second target data may be stored into at least one cache unit of the cache. Here, the cache unit may include, but is not limited to, a cache block, a cache sector, and the like.

In some embodiments, the prefetching start address and the prefetching data length may be determined based on the prefetching information, and hit detection can be performed on a cache unit in the storage space of the cache based on the prefetching start address and the prefetching data length, if the cache unit corresponding to the prefetching start address and the prefetching data length is missing, the second target data is prefetched from the memory, and the second target data is stored into at least one cache unit of the cache. If the cache unit corresponding to the prefetching start address and the prefetching data length hits, the second target data may not be prefetched from the memory.

It can be understood that the first target data is data requested to be read by the first data read request, and the second target data is data requested to be pre-fetched by the first data read request. In the current request process, the first target data is returned to the request source, and the second target data is stored in at least one cache unit of the cache. If the second target data is requested to be read in the subsequent data read request, the stored second target data can be directly read from the cache, so that the cache hit rate can be improved, and the efficiency of data reading is improved.

In the embodiment of the present disclosure, the first data read request sent by a request source is received, and the first data read request is used to request data reading according to the reading information and data prefetching according to the prefetching information, the reading information and the prefetching information are acquired according to the first data read request, the first target data is read from the storage space of the cache and/or the memory based on the reading information, and the first target data is returned to the request source. The second target data is prefetched from the memory based on the prefetching information, and the second target data is stored into at least one cache unit of the cache. In this way, the request source can send the prefetching information together with the data read request to the cache, and the data can be read and prefetched by a single data read request. Thus, on the one hand, the data request pressure between the request source and the cache can be reduced, the request bandwidth can be compressed, and the processor performance can be improved. On the other hand, data prefetching may be controlled by the prefetching information acquired from the data read request, so that the prefetching mode can be flexibly controlled task by task to meet the data reading requirements of each task.

In some embodiments, the above steps S101 to S104 may be performed by a cache in a chip. The first target data includes at least one first target sub-data, and the cache includes a first cache sub-module and a second cache sub-module.

The above step S101 may include the following step S111.

In step S111, the first cache sub-module receives the first data read request sent by the request source.

The above step S102 may include the following step S112.

In step S112, the first cache sub-module obtains the reading information and the prefetching information according to the first data read request. The reading information includes a first read request address and a first read data length.

The above step S103 may include the following steps S113 to S114.

In step S113, the first cache sub-module determines at least one data read sub-request based on the first read request address and the first read data length, and the data request length corresponding to each data read sub-request is equal to the cache unit length of the first cache sub-module.

Here, the first read request address and the first read data length may correspond to one data read sub-request or may correspond to multiple data read sub-requests. The data request length corresponding to each data read sub-request is equal to the cache unit length of the first cache sub-module, that is, the request data amount corresponding to each data read sub-request is aligned according to the cache unit length of the first cache sub-module.

In some embodiments, the first read data length is less than the cache unit length of the first cache sub-module, indicating that the data amount of the first data read request is not enough for one cache unit, and the first read request address and the first read data length can be aligned according to the cache unit length to obtain a data read sub-request with data request length equal to the cache unit length of the first cache sub-module.

In some embodiments, the first read data length is equal to the cache unit length of the first cache sub-module, indicating that the data amount of the first data read request corresponds to one cache unit, and a data read sub-request can be obtained directly based on the first read request address and the first read data length.

In some embodiments, the first read data length is greater than the cache unit length of the first cache sub-module, indicating that the data amount of the first data read request exceeds one cache unit, the first read request address and the first read data length can be split and aligned according to the cache unit length to obtain a plurality of data read sub-requests, and the data request length corresponding to each data read sub-request is equal to the cache unit length of the first cache sub-module.

In step S114, the first cache sub-module acquires first sub-target data corresponding to each data read sub-request from a storage space of the first cache sub-module, a storage space of the second cache sub-module, and/or a memory, and returns each of the first sub-target data to the request source.

The above step S104 may include the following step S115.

In step S115, the second cache sub-module prefetches a second target data from the memory based on the prefetching information, and stores the second target data into at least one cache unit of the second cache sub-module.

In the above embodiment, the cache includes a first cache sub-module and a second cache sub-module, and the first cache sub-module parses the first data read request in response to receiving the first data read request sent by the request source, to obtain the first read request address, the first read data length and the prefetching information. The first cache sub-module determines at least one data read sub-request based on the first read request address and the first read data length, and the data request length corresponding to each data read sub-request is equal to the cache unit length of the first cache sub-module. The first cache sub-module obtains first target sub-data corresponding to each data read sub-request from the storage space of the first cache sub-module, the storage space of the second cache sub-module, and/or the memory, and returns each of the first target sub-data to the request source. The second cache sub-module prefetches the second target data from the memory based on the prefetching information, and stores the second target data into at least one cache unit of the second cache sub-module. In this way, reading and prefetching of data can be implemented simply and quickly by a single data read request from the request source in the cache containing a multi-level cache.

In some embodiments, in above step S114 that the first cache sub-module acquires the first target sub-data corresponding to each of the data read sub-requests from the storage space of the first cache sub-module, the storage space of the second cache sub-module, and/or the memory may include the following steps S121 to S122.

In step S121, the first cache sub-module performs hit detection on a cache unit in a storage space of the first cache sub-module based on each of the data read sub-requests, to obtain a second detection result corresponding to the respective read data sub-request.

In step S122, for each of the read data sub-requests, when the second detection result corresponding to the data read sub-request indicates that the cache unit corresponding to the data read sub-request hits, the first cache sub-module reads the first target sub-data corresponding to the data read sub-request from the hit cache unit, and when the second detection result corresponding to the data read sub-request indicates that the cache unit corresponding to the data read sub-request is missing, the first cache sub-module sends a second data read request to the second cache sub-module based on the second read request address, the second read data length and the prefetching information corresponding to the data read sub-request, and receives the first target sub-data corresponding to the data read sub-request returned by the second cache sub-module.

Here, the second read request address corresponding to the data read sub-request refers to a start address of the data requested by the data read sub-request, and the second read data length corresponding to the data read sub-request refers to the length of the data requested by the data read sub-request.

When the second detection result corresponding to the data read sub-request indicates that the cache unit corresponding to the data read sub-request is missing, the second data read request may be generated based on the second read request address, the second read data length, and the prefetching information corresponding to the data read sub-request, and the second data read request may be transmitted to the second cache sub-module. In implementation, the second data read request may be generated based on the second read request address, the second read data length, and the prefetching information corresponding to the data read sub-request by the skilled person in any suitable manner according to the actual situation, which is not limited in the embodiments of the present disclosure.

In some embodiments, a read request address signal, a read data length signal, and a request type signal may be determined based on the second read request address, the second read data length, and the prefetching information, respectively, and a second data read request may be generated based on the read request address signal, the read data length signal, and the request type signal. For example, the second read request address may be encoded as a read request address signal in the second data read request, the second read data length may be encoded as a read data length signal in the second data read request, and the request type signal corresponding to the prefetching information may be determined based on a preset correspondence relationship between the request type and the prefetching information indicated by the request type signal, and the request type signal may be used as the request type signal of the second data read request.

In some embodiments, a read request address signal, a read data length signal, and a prefetching control signal may be determined based on the second read request address, the second read data length, and the prefetching information, respectively, and a second data read request may be generated based on the read request address signal, the read data length signal, and the prefetching control signal. For example, a prefetching control signal corresponding to the prefetching information may be determined based on the preset correspondence relationship between the prefetching control signal and the prefetching information.

The above step S115 that the second cache sub-module prefetches the second target data from the memory based on the prefetching information may include following steps S123 to S125.

In step S123, the second cache sub-module parses the second data read request in response to receiving the second data read request sent by the first cache sub-module, to obtain a second read request address, a second read data length, and the prefetching information.

In step S124, the second cache sub-module obtains first target sub-data from a storage space of the second cache sub-module and/or a memory based on the second read request address and the second read data length, and returns the first target sub-data to the first cache sub-module.

In step S125, the second cache sub-module prefetches second target data from the memory based on the prefetching information, and stores the second target data into at least one cache unit of the second cache sub-module.

Here, steps S123 to S125 correspond to steps S101 to S104 in the aforementioned embodiment, respectively, and reference can be made to the embodiment of the aforementioned steps S101 to S104 in implementation.

In the above embodiment, for each data read sub-request, when the second detection result corresponding to the data read sub-request indicates that the cache unit corresponding to the data read sub-request hits, the first cache sub-module reads the first target sub-data corresponding to the data read sub-request from the hit cache unit, and when the second detection result corresponding to the data read sub-request indicates that the cache unit corresponding to the data read sub-request is missing, the first cache sub-module sends the second data read request to the second cache sub-module based on the second read request address, the second read data length, and the prefetching information corresponding to the data read sub-request. In response to receiving the second data read request sent by the first cache sub-module, the second cache sub-module parses the second data read request to obtain the second read request address, the second read data length and the prefetching information. In this way, when a part of data read sub-requests corresponding to the first data read request does not hit the cache unit in the first cache sub-module, the prefetching information can be carried to the second cache sub-module through the second data read request corresponding to the part of data read sub-requests, so that the data request pressure between the request source and the first cache sub-module can be reduced in the cache including the multi-level cache, the occupation of the request bandwidth can be reduced, and the processor performance can be improved.

In some embodiments, when all cache units corresponding to the data read sub-requests hit, the prefetching information may be discarded, that is, the prefetching information may not be sent to the second cache sub-module. In this way, since all the cache units corresponding to the data read sub-requests hit, the data request pressure between the first cache sub-module and the second cache sub-module can be reduced, and the situation that the request bandwidth between the first cache sub-module and the second cache sub-module becomes a memory access bottleneck can be reduced, and usually the request bandwidth between the request source and the first cache sub-module is not less than the request bandwidth between the first cache sub-module and the second cache sub-module, the situation that the request bandwidth between the first cache sub-module and the second cache sub-module becomes a memory access bottleneck can be reduced. Thus, the request source can prefetch data corresponding to the discarded prefetching information by sending a separate prefetching request to the first cache sub-module, thereby reducing the processing resources occupied by the second cache sub-module for processing the prefetching information carried by the read request. Further, in a case where the scenario in which the prefetching is used is a circular calculation scenario, the data requested in circular calculation processes usually does not overlap, and the data corresponding to the prefetching information is usually missing in the first request, so that the prefetching information for prefetching the next piece of data to be prefetched carried in the first data read request for requesting the data is usually carried into the second cache sub-module.

The embodiments of the present disclosure provide a data reading method that can be applied to a chip, and can be executed by for example a cache in the chip. FIG. 2 is a schematic flowchart of an implementation of a data reading method provided by an embodiment of the present disclosure. As shown in FIG. 2, the method includes following steps S201 to S205.

In step S201, a first data read request sent by the request source is received. The first data read request is used to request reading data according to the reading information and prefetching data according to the prefetching information.

In step S202, the reading information and the prefetching information are acquired according to the first data read request. The prefetching information includes a prefetching data length.

In step S203, the first target data is read from a storage space of the cache and/or a memory based on the reading information, and the first target data is returned to the request source.

Here, steps S201 to S203 may correspond to steps S101 to S103 in the above-described embodiment, respectively, and reference can be made to the embodiment of the above-described steps S101 to S103 in implementation.

In step S204, when the prefetching data length is greater than 0, a prefetching start address is determined based on the first read request address and the first read data length.

Here, the prefetching start address is a start address at which data prefetching is performed.

In some embodiments, the first read request address may be added to the first read data length to obtain the prefetching start address.

In some embodiments, the first read request address and the first read data length may be aligned according to the cache unit length in the cache to obtain the aligned first read request address and the aligned first read data length, and the aligned first read request address may be added to the aligned first read data length to obtain the prefetching start address.

In step S205, a second target data is prefetched from the memory based on the prefetching start address and the prefetching data length, and the second target data is stored into at least one cache unit of the cache.

In the embodiment of the present disclosure, when the prefetching data length is greater than 0, the prefetching start address is determined based on the first read request address and the first read data length, the second target data is prefetched from the memory based on the prefetching start address and the prefetching data length, and the second target data is stored into at least one cache unit of the cache. In this way, it is possible to easily and conveniently control whether or not to perform data prefetching according to whether or not the prefetching data length is greater than 0, and to control the prefetched second target data by the prefetching data length when the prefetching data length is greater than 0, so that the data reading requirements of each task can be flexibly satisfied.

In some embodiments, the reading information includes a first read request address and a first read data length. The above step S202 may include following steps S211 to S212.

In step S211, the request type signal, the read request address signal, and the read data length signal in the first data read request are respectively parsed to obtain the first request type, the first read request address, and the first read data length.

Here, the first data read request sent by the request source to the cache may include a request type signal, a read request address signal, and a read data length signal. The request type signal indicates a request type of the first data read request, the read request address signal indicates a start address of data to be requested to be read corresponding to the first data read request, and the read data length signal indicates a length of data to be requested to be read. Therefore, the first request type, the first read request address, and the first read data length of the first data read request can be obtained by parsing the request type signal, the read request address signal, and the read data length signal in the first data read request, respectively.

In step S212, a prefetching data length is determined based on the first request type.

Here, a plurality of request types may be defined in advance, and different request types may correspond to different prefetching data lengths, so that corresponding prefetching data length may be determined based on the first request type. In implementation, those skilled in the art can define the correspondence between the request types and the prefetching data lengths according to the actual situation, which is not limited in the embodiment of the present disclosure.

For example, when the request type signal is 0'b101, it is determined that the first request type is a read-only type, and the prefetching data length is determined to be 0, and when the request type signal is 0'b110, it is determined that the first request type is a type of reading and prefetching one cache unit, and the prefetching data length is determined to be one cache unit, and when the request type signal is 0'b111, it is determined that the first request type is a type of reading and prefetching four cache units, and the prefetching data length is determined to be four cache units.

In the above embodiment, the request type signal, the read request address signal and the read data length signal in the first data read request are respectively parsed to obtain the first request type, the first read request address and the first read data length of the first data read request, and the prefetching data length is determined based on the first request type. In this way, the prefetching data length can be determined simply and quickly by the request type.

In some embodiments, the reading information includes a first read request address and a first read data length. The above step S202 may include the following step S221.

In step S221, the read request address signal, the read data length signal and the prefetching control signal in the first data read request are respectively parsed to obtain the first read request address, the first read data length and the prefetching data length.

Here, the first data read request may include a read request address signal, a read data length signal and a prefetching control signal. The read request address signal is parsed to obtain a first read request address, and the read data length signal is parsed to obtain the first read data length, and the prefetching control signal is parsed to obtain the prefetching information. In implementation, a correspondence relationship between multiple prefetching control signals and prefetching data lengths may be set in advance, and prefetching data length corresponding to the prefetching control signal in the first data read request may be determined based on the correspondence relationship. The correspondence relationship between prefetching control signals and prefetching data lengths can be set by the skilled in the art according to the actual situation, which is not limited in the embodiment of the present disclosure. For example, when the prefetching control signal is 0'b0, the prefetching data length may be determined to be 0, and when the prefetching control signal is 0'b1, the prefetching data length may be determined to be 1 cache unit.

In the above embodiment, the read request address signal, the read data length signal and the prefetching control signal in the first data read request are respectively parsed to obtain the first read request address, the first read data length and the prefetching data length of the first data read request. In this way, the prefetching data length can be determined simply and quickly by the prefetching control signal.

In some embodiments, the above step S205 may include following steps S231 to S232:
In step S231, at least one prefetching sub-request is determined based on the prefetching start address and the prefetching data length, and the data request length corresponding to each of the prefetching sub-requests is equal to the cache unit length of the cache.

Here, the prefetching start address and the prefetching data length may correspond to one prefetching sub-request or multiple prefetching sub-requests. The data request length corresponding to each prefetching sub-request is equal to the cache unit length of the first cache sub-module, that is, the request data amount corresponding to each prefetching sub-request is aligned according to the cache unit length of the first cache sub-module.

In some embodiments, the prefetching data length is smaller than the cache unit length of the first cache sub-module, indicating that the amount of data requested to be prefetched by the first data read request is not enough for one cache unit, and the prefetching start address and the prefetching data length can be aligned according to the cache unit length to obtain a prefetching sub-request with data request length is equal to the cache unit length of the first cache sub-module.

In some embodiments, the first read data length is equal to the length of the cache unit of the first cache sub-module, indicating that the amount of data requested to be prefetched by the first data read request corresponds to one cache unit, and a prefetching sub-request can be obtained directly based on the prefetching start address and the prefetching data length.

In some embodiments, the first read data length is greater than the cache unit length of the first cache sub-module, indicating that the amount of data requested to be prefetched by the first data read request exceeds one cache unit, the prefetching start address and the prefetching data length can be split and aligned according to the cache unit length to obtain multiple prefetching sub-requests, and the data request length corresponding to each prefetching sub-request is equal to the cache unit length of the first cache sub-module.

In step S232, for each of the prefetching sub-requests, hit detection is performed on a cache unit in the storage space of the cache based on the prefetching sub-request to obtain a first detection result, and when the first detection result indicates that the cache unit corresponding to the prefetching sub-request is missing, a second target data is prefetched from the memory based on the prefetching sub-request, and the second target data is stored into at least one cache unit of the cache.

In the above embodiment, hit detection may be performed on a cache unit for each cache unit sub-request, and when the cache unit corresponding to the prefetching sub-request is missing, the second target data may be prefetched from the memory based on the prefetching sub-request. In this way, data prefetching is performed at a granularity of the prefetching sub-request, which can improve the flexibility of controlling data prefetching.

In some embodiments, the prefetching data length is an integer multiple of the length of a cache unit, the cache unit includes a cache block or a cache sector. In this way, the prefetching data length can adapt to the cache with the granularity of the corresponding cache unit.

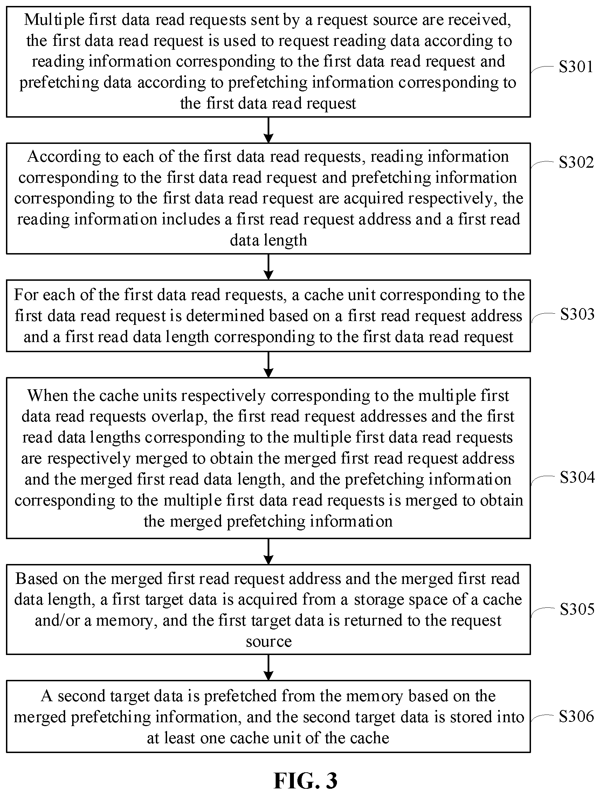

An embodiment of the present disclosure provides a data reading method which can be applied to a chip, and can be executed by for example a cache in the chip. FIG. 3 is a schematic flowchart of an implementation of a data reading method provided by an embodiment of the present disclosure. As shown in FIG. 3, the method includes the following steps S301 to S306.

In step S301, multiple first data read requests sent by a request source are received. The first data read request is used to request data reading according to reading information corresponding to the first data read request and prefetching data according to prefetching information corresponding to the first data read request.

In step S302, according to each of the first data read requests, reading information corresponding to the first data read request and prefetching information corresponding to the first data read request are respectively acquired. The reading information includes a first read request address and a first read data length.

Here, steps S301 to S302 correspond to steps S101 to S102 in the aforementioned embodiment, respectively, and reference can be made to the embodiment of the aforementioned steps S101 to S102 in implementation.

In step S303, for each of the first data read requests, a cache unit corresponding to the first data read request is determined based on the first read request address and the first read data length corresponding to the first data read request.

Here, the cache unit corresponding to the first data read request may be obtained by mapping of the first read request address and the first read data length corresponding to the first data read request.

In step S304, when the cache units, corresponding to the multiple first data read requests respectively, overlap, the first read request address and the first read data length corresponding to the multiple first data read requests are respectively merged to obtain the merged first read request address and the merged first read data length, and the prefetching information corresponding to the multiple first data read requests is merged to obtain the merged prefetching information.

Here, the first read request address and the first read data length corresponding to each first data read request may respectively determine an address interval.

In some embodiments, a union of address intervals corresponding to each first data read request may be determined as a target address interval, a start address of the target address interval is determined as the merged first read request address, and the length of the target address interval is determined as the merged first read data length.

In some embodiments, the address intervals corresponding to all the first data read requests may be aligned according to the length of the cache unit in the cache, and the union of the aligned address intervals is determined as the target address interval, and the start address of the target address interval is determined as the merged first read request address, and the length of the target address interval may be determined as the merged first read data length.

In step S305, first target data is acquired from the storage space of the cache and/or the memory based on the merged first read request address and the merged first read data length, and the first target data is returned to the request source.

In step S306, a second target data is prefetched from the memory based on the merged prefetching information, and the second target data is stored into at least one cache unit of the cache.

Here, steps S305 to S306 correspond to steps S103 to S104 in the aforementioned embodiment, respectively, and reference can be made to the embodiment of the aforementioned steps S103 to S104 in implementation.

In the embodiment of the present disclosure, for the multiple received first data read requests, when the cache units, corresponding to the multiple first data read requests respectively, overlap, the first read request addresses and the first read data lengths corresponding to the multiple first data read requests may be merged respectively to obtain the merged first read request address and the merged first read data length, and the prefetching information corresponding to the multiple first data read requests may be merged to obtain the merged prefetching information. In this way, the second target data can be prefetched from the memory based on the merged prefetching information, to reduce the number of times of prefetching data from the memory, and further reduce the number of data requests between the cache and the memory, and further improve the performance of the processor.

In some embodiments, the above step S304 that the prefetching information corresponding to the multiple first data read requests are merged to obtain the merged prefetching information includes the following step S311.

In step S311, the prefetching information corresponding to the first data read request having the last first read request address among the multiple first data read requests is determined as the merged prefetching information.

Here, since the cache units respectively corresponding to the multiple first data read requests overlap with each other, data to be prefetched indicated by the prefetching information corresponding to a first data read request may be duplicated with data requested to be read by another first data read request whose first read request address is behind the first read request address corresponding to the first data read request. Therefore, the prefetching information corresponding to the first data read request with the last first read request address among the multiple first data read requests can be determined as the merged prefetching information. In this way, unnecessary repeated prefetching of data can be reduced, and the performance of the processor can be further improved.

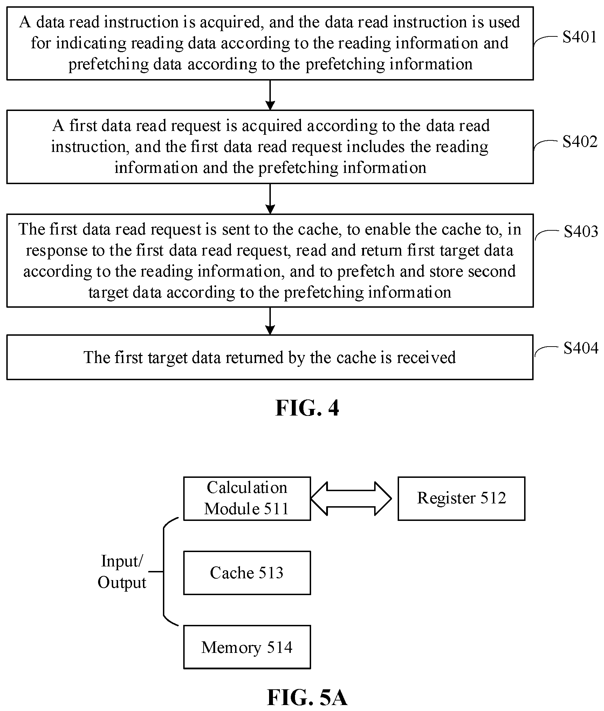

An embodiment of the present disclosure provides a data reading method, which can be applied to a chip. FIG. 4 is a schematic flowchart of an implementation of a data reading method provided by an embodiment of the present disclosure. As shown in FIG. 4, the method includes the following steps S401 to S404.

In step S401, a data read instruction is acquired. The data read instruction indicates reading data according to the reading information and prefetching data according to the prefetching information.

Here, the data read instruction may be an instruction for performing data reading in a task currently executed by the computing module in the chip. In implementation, a person skilled in the art may set an appropriate data read instruction according to the task actually performed.

In some embodiments, the data read instruction may be generated by the application software and sent to the computing module in the chip to instruct the computing module to read data according to the reading information based on the data read instruction and to prefetch data according to the prefetching information. Here, the reading information and the prefetching information may be determined by the application software according to actual data reading requirements.

In some embodiments, the data read instruction may be generated by a computing module in the chip and sent to other computing module to instruct the other computing module to read data according to the reading information based on the data read instruction and prefetch data according to the prefetching information. The reading information and the prefetching information may be determined by a computing module according to the actual data reading requirements.

In step S402, a first data read request is acquired according to the data read instruction. The first data read request includes the reading information and the prefetching information.

Here, the data read instruction can be parsed, to obtain reading information and prefetching information corresponding to the data read instruction, and a first data read request can be generated according to the reading information and prefetching information. In implementation, the data read instruction may be parsed by any appropriate parse method according to the actual situation, which is not limited in the embodiment of the present disclosure.

In some embodiments, the data read instruction may include a read control code and a prefetching control code, the read control code is parsed to obtain reading information, and the prefetching control code is parsed to obtain prefetching information.

In some embodiments, the data read instruction may include a read request address code, a read data length code, and a prefetching control code, the read request address code is parsed to obtain the first read request address, the read data length code is parsed to obtain the first read data length, and the prefetching control code is parsed to obtain prefetching information. In implementation, multiple correspondence relationships between prefetching control codes and pieces of prefetching information may be set in advance, and prefetching information corresponding to the prefetching control code in the data read instruction may be determined based on the correspondence relationship. Those skilled in the art can set an appropriate correspondence relationship between the prefetching control codes and the prefetching information according to the actual situation, which is not limited in the embodiment of the present disclosure.

In some implementations, the prefetching information includes a prefetching switch state characterizing whether to perform data prefetching, which may be indicated by the prefetching control code. For example, when the prefetching control code is 0'b0, the prefetching switch state may be determined to be an OFF state characterizing not to perform data prefetching, and when the prefetching control code is 0'b1, the prefetching switch state may be determined to be an ON state characterizing to perform data prefetching. When the prefetching switch state is an on state indicating to perform data prefetching, the prefetching data length may be default or may be controlled by other filed in the data read instruction, which is not limited here.

In some implementations, the prefetching information includes a prefetching data length, which may be indicated by prefetching control code. For example, the prefetching data length may be determined to be 0 when the prefetching control code is 0'b0, and the prefetching data length may be determined to be 1 cache unit when the prefetching control code is 0'b1. For another example, the prefetching data length may be determined to be 0 when the prefetching control code is 0'b00, and the prefetching data length may be determined to be one cache unit when the prefetching control code is 0'b01, the prefetching data length may be determined to be two cache units when the prefetching control code is 0'b10, and the prefetching data length may be determined to be three cache units when the prefetching control code is 0'b11.

In some embodiments, the data read instruction may include an instruction type code, a read request address code, and a read data length code. The read request address code may be parsed to obtain a first read request address, the read data length code may be parsed to obtain a first read data length, and the instruction type code may be parsed to obtain prefetching information. In implementation, multiple instruction type codes may be defined in advance, request types may be indicated by the instruction type codes, and the request types indicated by different instruction type codes may correspond to different prefetching information, so that corresponding prefetching information can be determined based on the instruction type code in the data read instruction. Those skilled in the art may define an appropriate instruction type code and a correspondence relationship between the request type indicated by each instruction type code and the prefetching information according to the actual situation, which is not limited in the embodiment of the present disclosure.

In some embodiments, the prefetching information includes a prefetching switch state characterizing whether to perform data prefetching, the request type may be indicated by the instruction type code, and the prefetching switch state is determined according to the request type. For example, in case that the instruction type code is 0'b101, the request type is determined to be a read-only type that is, only data reading is performed and no data prefetching is performed, so that the prefetching switch state is an off state characterizing that no data prefetching is performed. In case that the instruction type code is 0'b110, it is determined that the request type is a type of reading together with prefetching, that is, data reading is performed and data prefetching is also performed, so that the prefetching switch state is an on state characterizing that data prefetching is performed.

In some implementations, the prefetching information includes a prefetching data length, the request type may be indicated by the instruction type code, and the prefetching data length is determined according to the request type. For example, in a case where the instruction type code is as 0'b101, the request type is determined to be a read-only type, and the prefetching data length is determined to be 0. In a case where the instruction type code is 0'b110, the request type is determined to be a type of reading and prefetching one cache unit the prefetching data length is determined to be 1 cache unit. In the case where the instruction type code is 0'b111, the request type is determined to be a type of reading and prefetching fur cache units, and the prefetching data length is determined to be 4 cache units.

In some embodiments, the reading information may be included in the read control signal in the first data read request, and the prefetching information may be included in the request type signal in the first data read request. The read control signal and the request type signal may be determined based on the reading information and the prefetching information, respectively, and a first data read request may be generated based on the read control signal and the request type signal.

In some embodiments, the reading information may be included in the read control signal in the first data read request, and the prefetching information may be included in the prefetching control signal in the first data read request. The read control signal and the prefetching control signal may be determined based on the reading information and the prefetching information, respectively, and the first data read request may be generated based on the read control signal and the prefetching control signal.

In step S403, the first data read request is sent to the cache to enable the cache, in response to the first data read request, to read and return first target data according to the reading information and prefetch and store a second target data according to the prefetching information.

In step S404, the first target data returned by the cache is received.

In the embodiment of the present disclosure, a data read instruction is obtained, and the data read instruction is used to indicate reading data according to the reading information and prefetching data according to the prefetching information. A first data read request is acquired according to the read data instruction, and the first data read request includes the reading information and the prefetching information. The first data read request is sent to the cache to enable the cache, in response to the first data read request, to read and return first target data according to the reading information and prefetch and store the second target data according to the prefetching information. The first target data returned by the cache is received. In this way, the request source of the data read request can send the prefetching information together with the data read request to the cache, so that reading and prefetching of data can be implemented by a single data read request. Thus, on the one hand, the data request pressure between the computing module and the cache can be reduced, the request bandwidth can be compressed, and the processor performance can be improved. On the other hand, data prefetching may be controlled by the prefetching information obtained by parsing the data read instruction to implement instruction-level prefetching control, to meet the data reading requirement of each task.

In some embodiments, the reading information includes a first read request address and a first read data length. The above step S401 may include the following step S411.

In step S411, instruction encoding is performed according to the first read request address, the first read data length, and the prefetching information to obtain the data read instruction.

Here, instruction encoding may be performed on the first read request address, the first read data length, and the prefetching information, to encode the first read request address, the first read data length, and the prefetching information into the data read instruction, so that the data read instruction can be obtained easily and quickly.

In some embodiments, the data read instruction includes an instruction type code, a read request address code, and a read data length code. The above step S411 may include following steps S421 to S423.

In step S421, the instruction type code corresponding to the prefetching information is determined from a preset instruction type code set.

In step S422, the first read request address is encoded to obtain the read request address code.

In step S423, the first read data length is encoded to obtain the read data length code.

Here, at least one preset instruction type code may be included in the instruction type code set, and different instruction type codes may characterize different request types. In implementation, a person skilled in the art may set an appropriate instruction type code set in advance according to an actual application scenario, which is not limited in the embodiment of the present disclosure.

In the above embodiment, the prefetching information is encoded into the instruction type code, thereby reducing the occupation of the bit field in the data read instruction, and simplifying the design of the instruction set.

In some embodiments, the above step S402 may include following steps S431 to S432.

In step S431, the instruction type code, the read request address code, and the read data length code are parsed respectively to obtain the prefetching information, the first read request address, and the first read data length;

In step S432, the first data read request is generated according to the prefetching information, the first read request address, and the first read data length.

Here, the read data instruction may include an instruction type code, a read request address code, and a read data length code. The read request address code may be parsed to obtain the first read request address, the read data length code may be parsed to obtain the first read data length, and the instruction type code may be parsed to obtain the prefetching information. In some embodiments, the prefetching information includes a prefetching data length. In implementation, a plurality of instruction type codes may be defined in advance, and request types indicated by different instruction type codes may correspond to different prefetching data lengths, so that corresponding prefetching data length may be determined based on the instruction type code in the data read instruction.

In the above embodiment, the instruction type code, the read request address code, and the read data length code in the read data instruction are respectively parsed to obtain the prefetching information, the first read request address, and the first read data length. In this way, the prefetching information can be determined simply and quickly by the request type, and the first data read request can be quickly generated according to the prefetching information, the first read request address, and the first read data length.

In some embodiments, the data read instruction includes a read request address code, a read data length code, and a prefetching control code. The above step S411 may include following steps S441 to S443.

In step S441, the first read request address is encoded to obtain the read request address code.

In step S442, the first read data length is encoded to obtain the read data length code.

In step S443, the prefetching information is encoded to obtain the prefetching control code.

It can be understood that the method of encoding the first read request address, the first read data length, and the prefetching information may be any appropriate encoding method determined according to the actual situation, which is not limited in the embodiment of the present disclosure.

As described above, the prefetching information is separately encoded into the prefetching control code without extending existing instruction type code, to simplify the coding and decoding complexity of the instruction type code.

In some embodiments, the prefetching information may include a prefetching data length, and the prefetching data length is encoded to obtain a prefetching control code.

In some embodiments, the above step S402 may include the following steps S451 to S452.

In step S451, the read request address code, the read data length code, and the prefetching control code are respectively parsed to obtain the first read request address, the first read data length, and the prefetching information.

In step S452, the first data read request is generated according to the prefetching information, the first read request address, and the first read data length.

Here, the data read instruction may include a read request address code, a read data length code and a prefetching control code. The read request address code is parsed to obtain the first read request address, the read length code is parsed to obtain the first read data length, and the prefetching control code is parsed to obtain the prefetching information. In some embodiments, the prefetching information includes a prefetching data length. In implementation, multiple correspondence relationships between prefetching control codes and prefetching data lengths may be set in advance, and the prefetching data length corresponding to the prefetching control code in the data read instruction may be determined based on the correspondence relationship. For example, when the prefetching control code is 0'b0, the prefetching data length may be determined to be 0, and when the prefetching control code is 0'b1, the prefetching data length may be determined to be 1 cache unit.

In the above embodiment, the read request address code, the read data length code and the prefetching control code in the data read instruction are respectively parsed to obtain the first read request address, the first read data length and the prefetching data length. In this way, the prefetching information can be indicated simply and quickly by the prefetching control code, so that the first data read request can be quickly generated according to the prefetching information, the first read request address, and the first read data length.

In some embodiments, step S432 and/or step S452 described above may include step S461 or step S462 as follows.

In step S461, a read request address signal, a read data length signal, and a request type signal are determined according to the first read request address, the first read data length, and the prefetching information, respectively, and the first data read request is determined according to the read request address signal, the read data length signal, and the request type signal.

In some implementations, the first read request address may be encoded as the read request address signal in the first data read request, the first read data length is encoded into the read data length signal in the first data read request. The request type signal corresponding to the prefetching information is determined based on a preset correspondence relationship between the request type indicated by the request type signal and the prefetching information, and the request type signal is taken as the request type signal of the first data read request.

In some embodiments, the prefetching information includes the prefetching data length, and a request type signal corresponding to the prefetching data length may be determined based on a preset correspondence relationship between the request type indicated by the request type signal and the prefetching data length, and the request type signal is taken as the request type signal of the first data read request.

In step S462, a read request address signal, a read data length signal, and a prefetching control signal are determined according to the first read request address, the first read data length, and the prefetching information, respectively, and the first data read request is generated according to the read request address signal, the read data length signal, and the prefetching control signal.

In some embodiments, the prefetching control signal corresponding to the prefetching information may be determined based on a preset correspondence relationship between the prefetching control signal and the prefetching information.

In some embodiments, the prefetching information includes a prefetching data length, and the prefetching control signal corresponding to the prefetching data length may be determined based on the preset correspondence relationship between the prefetching control signal and the prefetching data length.

In some embodiments, the above step S401 may include the following steps S471 to S473.

In step S471, the amount of read data and an estimated calculation time length of a current task are acquired.

Here, the calculation time length of the current task can be estimated, to obtain the estimated calculation time length. In implementation, the calculation time length of the current task may be estimated in any suitable estimation method, which is not limited in the embodiment of the present disclosure.

In some embodiments, the calculation complexity of the current task may be determined, the calculation time length of the current task may be estimated based on the calculation complexity, to obtain the estimated calculation time length.

The amount of read data of the current task refers to the amount of data that needs to be read when executing the current task. In some implementations, the amount of read data may be carried in task information of the current task. In other embodiments, a data read requirement of the current task may be parsed to obtain the amount of read data.

In step S472, the prefetching information is determined according to the amount of read data and the estimated calculation duration.

In some embodiments, a time length required to read data equal to the amount of read data from the cache is estimated to obtain an estimated read time length. The prefetching information is determined according to the magnitude relationship between the estimated read time length and the estimated calculation time length.

In step S473, the data read instruction is determined according to the prefetching information.

It can be understood that since the amount of read data and the estimated calculation time length of the current task can reflect the data access time consumption and the data calculation time consumption in the execution process of the current task, respectively, the data prefetching can improve the efficiency of data reading to a certain extent and reduce the time consumption in the data reading. Therefore, whether the operation of data reading together with data prefetching is required in the execution scenario of the current task is determined according to the amount of read data and the estimated calculation time length, appropriate prefetching information is determined for the execution scenario of the current task according to the amount of read data and the estimated calculation time length, and an appropriate data read instruction is determined, so as to better balance the calculation time consumption and the data access time consumption in the execution process of the task.

In some embodiments, the above step S472 may include the following steps S481 to S482.

In step S481, a first estimated read time length corresponding to the amount of read data when the data prefetching function is turned on, and a second estimated read time length corresponding to the amount of read data when the data prefetching function is turned off are determined.

In step S482, the prefetching information is determined according to a magnitude relationship between the estimated calculation time length and the first estimated read time length and/or a magnitude relationship between the estimated calculation time length and the second estimated read time length.

Here, turning the data prefetching function on refers to performing data reading in a manner of reading data together with prefetching data, that is, prefetching information carried in the data read instruction to indicate data prefetching, and turning the data prefetching function off refers to performing data reading in a manner of reading data without prefetching data, that is prefetching information carried in the data read instruction to indicate no data prefetching.

It should be understood that the first estimated read time length may reflect the data memory access time consumption required to perform the current task in a case of turning the data prefetching function on, and the second estimated read time length may reflect the data access time consumption required to perform the current task in a case of turning the data prefetching function off. Therefore, whether it is suitable to turn the data prefetching function on or off in the execution scenario of the current task is determined according to the magnitude relationship between the estimated calculation time length and the first estimated read time length and/or the second estimated read time length, to determine appropriate prefetching information to balance the calculation time consumption and the data access time consumption during the execution of the task.

In some embodiments, the step S482 may include: when the estimated calculation time length is greater than the first estimated read time length and less than the second estimated read time length, determining that the prefetching information is first prefetching information indicating that the data prefetching function is turned on.

Thus, the estimated calculation time length is greater than the first estimated read time length and less than the second estimated read time length, indicating that the data access time consumption required to execute the current task when the data prefetching function is turned on is less than the estimated calculation time length of the current task, and the data access time consumption required to execute the current task when the data prefetching function is turned off is greater than the estimated calculation time length of the current task. Therefore, the data prefetching function can be turned on in this scenario, to reduce the influence of the data read time consumption on the calculation efficiency. Therefore, in this scenario, the prefetching information can be determined as first prefetching information indicating that the data prefetching function is turned on, to reduce the influence of the data read time consumption on the computing efficiency, and better balance the calculation time consumption and the data access time consumption during the execution of the task.

In some embodiments, the above step S482 may include: when the estimated calculation time length is less than or equal to the first estimated read time length, determining that the prefetching information is first prefetching information indicating that the data prefetching function is turned on, or determining that the prefetching information is second prefetching information indicating that the data prefetching function is turned off.

As described above, the estimated calculation time length is less than or equal to the first estimated read time length, indicating that the data access time consumption required to execute the current task when the data prefetching function is turned on is not less than the estimated calculation time length of the current task, and in this scenario, the data prefetching function is turned on, to reduce the influence of the data read time consumption on the calculation efficiency to a certain extent, but the large data read time consumption may affect the overall execution time length of the task. Therefore, in this scenario, the prefetching information can be determined as the first prefetching information indicating that the data prefetching function is turned on, to reduce the influence of the data read time consumption on the calculation efficiency, thereby better balancing the calculation time consumption and the data access time consumption during the execution process of the task, or the prefetching information can be determined as the second prefetch information indicating that the data prefetching function is turned off, so as to simplify the process of data reading.

In some embodiments, the above step S482 may include: when the estimated calculation time length is greater than or equal to the second estimated read time length, determining that the prefetching information is second prefetching information indicating that the data prefetching function is turned off.

As described above, in a case where the estimated calculation time length is greater than or equal to the second estimated read time length, it is indicated that the data access time consumption required to execute the current task when the data prefetching function is turned off does not exceed the estimated calculation time length of the current task, and turning off the data prefetching function does not cause the data read time consumption to affect the calculation efficiency in this scenario. Therefore, in this scenario, the prefetching information can be determined to be the second prefetching information characterizing that the data prefetching function is turned off to simplify the process of data reading.

In some embodiments, the prefetching information includes a prefetching switch state, the first prefetching information may be an on state indicating to perform data prefetching, and the second prefetching information may be an off state indicating no to perform data prefetching.

In some embodiments, the prefetching information includes a prefetching data length, the first prefetching information may be an integer greater than 0, and the first prefetching information may be 0.

It can be understood that in a case where the prefetching information is the first prefetching information, the instruction type code or the prefetching control code in the data read instruction indicates to turn on data prefetching. When the prefetching information is the second prefetching information, the instruction type code or the prefetching control code in the data read instruction indicates that the data prefetching is turned off.

In some embodiments, the above step S481 may include the following steps S491 to S493.

In step S491, a time delay for sending a single request to the cache, a time delay for returning a single data by the cache, a time delay for sending a single request by the cache to a memory, and a time delay for returning a single data by the memory to the cache are estimated, to obtain a first estimated time delay, a second estimated time delay, a third estimated time delay, and a fourth estimated time delay, respectively.

Here, the time delay of sending a request to the cache and returning data by the cache may be estimated in any suitable manner, which is not limited in the embodiment of the present disclosure.

In some embodiments, the request source of the first data read request may be a computing module in the chip, and statistics may be respectively performed on a historical time delay of sending a single request to the cache by the computing module, a historical time delay of returning a single data to the computing module by the cache, a historical time delay of sending a single request to the memory by the cache, and a historical delay of returning a single data to the cache by the memory, to obtain the first estimated time delay, the second estimated time delay, the third estimated time delay, and the fourth estimated time delay.

In some embodiments, the time delay of sending a single request to the cache by the computing module may be estimated based on the data amount of sending the single request to the cache by the computing module and a data bandwidth between the computing module and the cache, to obtain a first estimated time delay. The time delay of returning single data to the computing module by the cache may be estimated based on the data amount of returning single data to the computing module by the cache and the data bandwidth between the computing module and the cache, to obtain a second estimated time delay. The time delay of sending a single request to the memory by the cache may be estimated based on the data amount of sending the single request to the memory by the cache and the data bandwidth between the cache and the memory, to obtain a third estimated time delay. The time delay of returning single data to the cache by the memory may be estimated based on the data amount of returning single data to the cache by the memory and the data bandwidth between the cache and the memory, to obtain a fourth estimated time delay.

In step S492, a sum of a first ratio between the amount of read data in the current task and the target bandwidth, the first estimated time delay, and the second estimated time delay is determined as the first estimated read time length. The target bandwidth is a data bandwidth between a request source of the first data read request and the cache.

In step S493, a sum of the first ratio, the first estimated time delay, the second estimated time delay, the third estimated time delay, and the fourth estimated time delay is determined as a second estimated read time length.

In the above embodiment, the first estimated read time length is obtained based on the sum of the first ratio between the amount of read data in the current task and the target bandwidth, the first estimated time delay, and the second estimated time delay, and the second estimated read time length is obtained based on the sum of the first ratio, the first estimated time delay, the second estimated time delay, the third estimated time delay and the fourth estimated time delay. When the estimated calculation time length is greater than the first estimated read time length and less than the second estimated read time length, the prefetching information is determined to be the first prefetching information indicating that the data prefetching function is turned on. In this way, on the one hand, the first estimated read time length is the sum of the first ratio between the amount of read data in the current task and the target bandwidth, the first estimated time delay of sending a single request to the cache by the computing module, and the second estimated time delay of returning a single data to the computing module by the cache. Therefore, the first estimated read time length may represent an estimated lower limit of time consumption for data reading in the current task. On the other hand, the second estimated read time length is the sum of the first ratio between the amount of read data in the current task and the target bandwidth, the first estimated time delay of sending a single request to the cache by the computing module, the second estimated time delay of returning a single data to the computing module by the cache, the third estimated time delay for sending a single request by the cache to the memory and the fourth estimated time delay for returning a single data by the memory to the cache. Therefore, the first estimated read time length may represent an estimated upper limit of time consumption for data reading in the current task. In this way, when the estimated calculation time length of the current task is greater than the first estimated read time length and less than the second estimated read time length, the prefetching information can be determined as the first prefetching information indicating that the data prefetching function is turned on, so that data reading and prefetching can be realized through a single data request, thereby reducing the data request pressure between the request source and the cache, improving the system performance, and increasing the cache hit rate, and further reducing the time consumption of data reading in the current task, so that the time consumption of data reading is occupied by the calculation time length, that is, the influence of the time consumption of data reading on the calculation efficiency is reduced, and the calculation time consumption and the data access time consumption are balanced in the execution process of task.

An application of the data reading method provided by the embodiment of the present disclosure to an actual scenario will be described below, and the following description will be made by taking a read request together with data prefetching under an instruction control on the basis of a combination of software and hardware as an example.

The optimization of memory access of the processor is a hot topic in computer architecture. In order to solve the delay problem caused by the mismatch between the access rate of the storage (e.g., a memory or the like) and the computation rate of the computing module in the processor, a cache may be provided in the processor, so that the rate of data reading and writing is adapted to the computation rate of the computing module, to improve the system performance. FIG. 5A is a schematic diagram of an implementation architecture of a data cache provided by an embodiment of the present disclosure. As shown in FIG. 5A, the architecture includes a calculation module 511, a register 512, a cache 513, and a memory 514. The input and/or output of data may be performed between the computing module 511, the cache 513, and the memory 514. The computing module 511 may read data from the cache 513, the register 512, and/or the memory 514 and perform an operation, and store the operation result in the cache 513, the register 512, and/or the memory 514.

In the related art, the processor mostly adopts data prefetching technology in which future memory access is predicted, and an access request corresponding to the memory block is sent before explicit access, data in the memory block is fetched into the cache in advance, so as to improve the hit rate of the cache.

In some related techniques, data prefetching may be implemented by means of software prefetching. In the software prefetching manner, the processor supports a prefetching instruction, and the application software running in the processor can send a to-be-prefetched address to hardware of the processor in the form of the prefetch instruction, so as to instruct the cache to prefetch data based on the address. For example, in the scenario of loop calculation, the application software can allocate 1, 2 or even 4 times more register space for a single loop according to the hardware resources in the processor, for storing prefetched data. Before starting the loop calculation, multiple data read requests after the current loop can be sent in advance to perform data prefetching, and the prefetched data can be stored in an additional allocated register space. Thus, in this software prefetching manner, although only ordinary data read request is used, and no additional support of hardware architecture is required, the on-chip register space that needs to be allocated is 1 to 4 times of originally used register space. In addition, capability of processing tasks in parallel in the parallel processors is reduced due to an increase of the number of registers consumed by a single task, and this problem is particularly apparent in video memory architectures having insufficient on-chip register resources. In addition, the downstream request path and the data return path cannot accurately distinguish the prefetching request from the current cycle request. Under the multi-processor parallel architecture, the prefetching request of some processors may block the normal memory access request of other processors, which decreases the number of parallel tasks.

In some related techniques, automatic prefetching of data may be implemented by means of hardware prefetching. In the hardware prefetching manner, the hardware function of the cache can be expanded, and when a data request is sent to the cache to perform hit query on a cache block address, the cache can automatically determine a to-be-prefetched address according to a preset prefetching strategy, and perform data prefetching according to the address. For example, the cache can automatically perform a hit query on the next or several cache units (denoted as prefetching blocks) of the cache unit corresponding to the read request address, and send a request to the lower-level cache or memory if the prefetching block is missing. In this way, although the request source does not need to send the read request and the prefetching request separately in this manner, and the user programming complexity is simplified, prefetching cannot be controlled task by task, and prefetching data replaces the data in use in the cache in some scenarios, which leads to worse performance than a case that this solution is not applicable.

Based on this, an embodiment of the present disclosure provides a data reading method by using a combination of hardware and software, in which data used in a subsequent loop is prefetched and stored in a storage space of a cache. Therefore, no additional register overhead is required, and the number of allocated parallel tasks is not affected. Moreover, the data read request carries the prefetching data length, and the data read request is sent to the cache, and parsed and segmented in the cache. Therefore, additional request path pressure is not caused and the request bandwidth can be compressed, and the prefetching data length can be configured by an instruction task by task, so as to flexibly and conveniently perform the prefetching control at a granularity of the instruction, and meet the prefetching requirement of the task. In addition, the data reading method can be compatible with a variety of cache modes, such as multi-level cache mode, sector mode, etc.

In some embodiments, the data reading method provided by the embodiment of the present disclosure may consider the following six aspects in implementation.

First, an instruction set is designed.

Here, the instruction set may be extended to obtain the data read instruction supporting the prefetching control. In the embodiment of the present disclosure, the data read instruction obtained by extension reuses the read request address and the read data length of the common read instruction in the related art, and extends the modification of the prefetching data length. In this way, the data length of data to be prefetched by taking the read request address plus the read data length as the prefetching start address can be described using the prefetching data length, without transmitting a separate prefetching instruction or additionally transmitting the prefetching start address in the instruction set. Furthermore, calculation overhead or transmission overhead for additional prefetching start address are not required when using the read data instruction obtained by extension.

In some embodiments, the manner of extending the modification of the prefetching data length in the data read instruction may be selected from two ways: 1) Type encoding expansion: if there is sufficient reserved encoding for the current architecture instruction type, the instruction type may be classified as a read instruction (i.e., a read-only type) or a read together with prefetching instruction; 2) Adding a bit field: an additional bit field (corresponding to prefetching control code) is added to indicate the prefetching data length, and code 0 can be reserved to indicate to turn the prefetching off (i.e., no data prefetching is performed). For example, the two manners of extending the prefetching data length may be shown in Table 1 below.

**Table 1 Schematic table of two modes of extending the prefetching data length**

| Encoding Support Mode | Encoding Example Before Extension | Encoding Example of extending the prefetching data length |
|---|---|---|
| Type encoding extension | 0'b101: read | 0'b101: read |
| | 0'b110: reserved | 0'b110: read together with prefetching subsequent one cache block |
| | 0'b111: reserved | |
| | | 0'b111: read together with prefetching subsequent two cache blocks |
| Adding Bit Field | None | Prefetch Control Encoding: |
| | | 0'b0: Turn off the prefetching |
| | | 0'b1: Prefetching the next memory block |

In some implementations, in order to be forward compatible with the instruction set, a default value of the prefetching control encoding bit field is configured to be a code characterizing to turn the prefetching off.

Secondly, an interface signal of the cache is designed.

Here, the design of the interface signal of the cache is similar to the instruction set design. In implementation, the original read request address and read data length can be retained in the interface signal of the cache, and the modification of the prefetching data length can be extended in the interface signal of the cache. The request source only sends the prefetching data length along with the data read request to the downstream cache, that is, the prefetching data length is passed to the cache for parsing and splitting by the cache.

The extending the modification of the prefetching data length in the interface signal of the cache is similar to the instruction set design, and the following two types are supported: 1) Type signal encoding expansion: if there is sufficient reserved encoding for the current architecture instruction type, a read-only request or a read request carrying prefetching can be directly distinguished by the request type signal; 2) Adding prefetching control signal: an additional prefetching control signal may be added to indicate the prefetching data length, and the prefetching control signal can reserve a code 0 for indicating to turn the prefetching off (i.e., no data prefetching is performed).

In some implementations, the design of the interface signal may also consider compression of control information to increase information entropy.

Third, an effect of the data amount of the request for a single read request data is described.

In some embodiments, the data read request sent to the cache is processed in the order of request splitting, cache block alignment, hit detection, and then data is requested from memory, and the read data is returned to an upstream request source, and/or the prefetched data is stored into a cache block of the cache.

Request splitting: the data read request, read data length of which exceeds the length of one cache block, is split and aligned according to the length of the cache block at the entrance of the cache. The address interval corresponding to the read request address and the read data length may be split and aligned to obtain multiple read sub-requests. The address interval corresponding to the prefetching start address (obtained after adding the read data length to the read request address) and the prefetching data length may be split and aligned to obtain multiple split prefetching sub-requests. Cache block hit detection may be performed respectively for each read sub-request and each prefetching sub-request.

Cache block alignment: the cache block is a basic data allocation and management unit in the cache. If the amount of data to be read corresponding to a single data read request sent by the request source is less than one cache block, the cache aligns the read request address corresponding to the data read request and the address interval corresponding to the read data length according to the length of the cache block. If the amount of data to be prefetched corresponding to a single data read request sent by the request source is less than one cache block, the cache may align the prefetching start address and the address interval corresponding to the prefetching data length according to the length of the cache block.

Cache block hit detection: the split read sub-request and the prefetching sub-request are sent to the cache block hit check unit for cache block hit detection. If a cache block is missing for a read sub-request or prefetching sub-request, the cache allocates a cache space for the missing read sub-request or prefetching sub-request, records and updates the read sub-request or the prefetching sub-request, transmits the missing read sub-request or prefetching sub-request to a downstream cache or memory, and obtains read data (corresponding to the first target data) or prefetched data (corresponding to the second target data) from the downstream cache or memory. The read data is returned to the request source, and the prefetched data is stored into at least one cache block of the cache.

Fourth, a mode in which the cache supports a sector is compatible.

In some embodiments, in a case that the current architecture supports finer granularity of cache control, a single request is allowed to be a subset of a cache block. For example, a cache block of 128 bytes has four cache sectors, allowing the request source to send a data read request to the cache in multiples of 32 bytes (i.e., the length of one cache Sector), the cache blocks are still allocated in accordance with the cache block length (e.g., 128 bytes). In this case, the corresponding prefetching data length in the data read request may be a multiple of the length of the cache sector.

Fifth, multi-level cache mode is compatible.

For the multi-level cache mode scenario, request merging and a complete or partial hit of the upstream cache may be considered.

Request merging: the data reading method provided by the embodiment of the present disclosure may support request merging. For example, each data read request sent by the request source in a multi-level cache or an upstream cache carries a prefetching data length, and multiple data read requests corresponding to overlapped cache blocks/sectors may be merged by the downstream cache, and only one prefetching data length is carried in the merged request. Since the read request address plus the read data length is used as the prefetching start address, the prefetching data corresponding to the merged data read request falls within an address interval between the read request address of the first data read request, and the read request address plus the read data length of the last data read request, and the address after the prefetching data length.

Complete or partial hit of the upstream cache: in the data reading method provided by the embodiment of the present disclosure, if the upstream cache is partially hit for multiple read sub-requests corresponding to the data read request sent by the request source, the partial read sub-request for which there is not hit can carry the prefetching data length into the downstream cache. If the upstream cache is hit for all the multiple read sub-requests corresponding to the data read request sent by the request source, the first sub-target data respectively stored by the multiple read sub-requests in the upstream cache are merged to obtain the first target data corresponding to the data read request, the first target data is returned to the request source, and the prefetching data length is discarded.

Sixth, scene selection is described.

According to the characteristics of calculation and memory access, tasks are usually divided into two categories: calculation-intensive category and memory-access-intensive category. The quotient (i.e. throughput) of the computing scale and calculation parallel capability is defined as the calculation time, and the quotient of data amount required for calculation and the memory access bandwidth is defined as the memory access time. For example, when the calculation time of the task is greater than the memory access time, the task may be classified into a calculation-intensive task. When the calculation time of a task is less than the memory access time, the task may be classified as a memory access-intensive task.

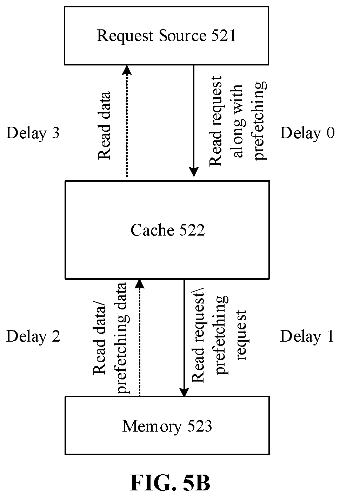

FIG. 5B is a schematic diagram of interaction between modules in a data reading method provided by an embodiment of the present disclosure. As shown in FIG. 5B, the request source 521 sends, to the cache 522, a data read request characterizing that the read request carries prefetching. In response to receiving the data read request, the cache 522 may send a read request and a prefetching request to the memory 523, and receive the read data and the prefetched data returned by the memory 523. The cache 522 returns the received read data to the request source 521, and stores the prefetched data into the storage space of the cache 522. Here, a time duration from requesting data by the request source 521 to the returning the read data can be segmented into four stages: delay 0 to 3. Delay 0 represents an estimated time delay for sending a single request by the request source 521 to the cache 522, delay 1 represents an estimated time delay for sending the single request by the cache 522 to the memory 523, delay 2 represents an estimated time delay for returning single data by the memory 523 to the cache 522, and delay 3 represents an estimated time delay for returning single data by the cache 522 to the request source 521.

Without prefetching, data read time = amount of requested data in the current task/target bandwidth + delay 0+ delay 1+ delay 2+ delay 3. The target bandwidth is a data bandwidth between the request source 521 and the cache 522.

In the case of prefetching, since the required data is prefetched to the cache in advance, the data may be hit in the cache and be directly returned when the data is requested, and there is no delay for requesting to the memory triggered due to the missing cache. Therefore, delay 1 and delay 2 are not considered. Therefore, in the case of prefetching, data read time = the amount of requested data of the current task/the target bandwidth + delay 0+ delay 3.

In some embodiments, when the estimated calculation time length of the current task satisfies the following conditions, the instruction type encoding or the prefetching control encoding may be used to indicate a read data instruction for turning on data prefetching (that is, the prefetching data length is greater than 0), to reduce the impact of data reading time consumption on calculation efficiency, so as to better balance the calculation time consumption and data memory access time consumption during task execution.

The amount of requested data of the current task /target bandwidth+ delay 0+ delay 3 <the estimated calculation time length of the current task <the amount of requested data of the current task /target bandwidth + delay 0+ delay 1+ delay 2+ delay 3.

However, if the estimated calculation time length of the current task > the requested data amount of the current task /target bandwidth + delay 0+ delay 1+ delay 2+ delay 3, the instruction type encoding or the prefetching control encoding can be used to indicate a data read instruction for turning off the data prefetching (that is, the prefetching data length is equal to 0).

Hereinafter, the application of the data reading method provided by the embodiment of the present disclosure is described by taking an example in which 128 bytes are requested per loop and data in the memory is fetched continuously in the loop.

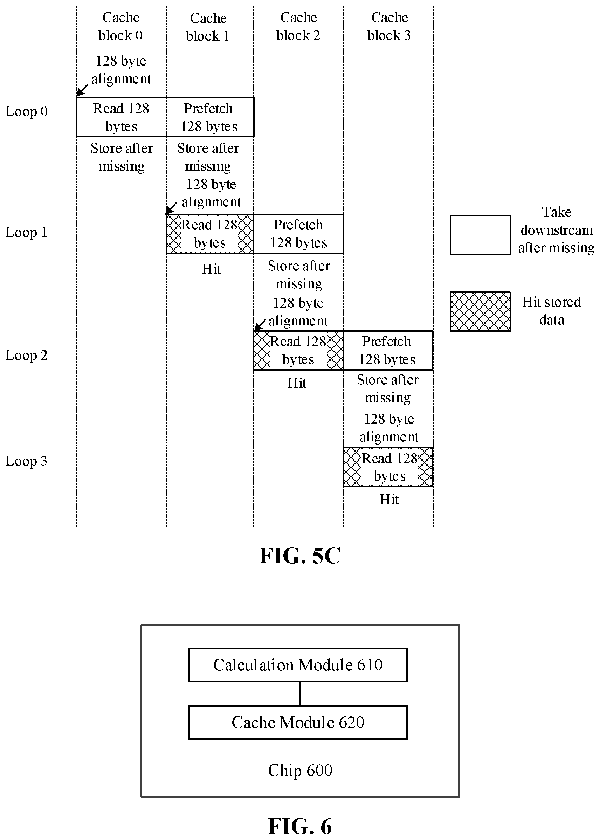

It is defined that the request data address is aligned based on 128 bytes, each read request can request 128 bytes of data (i.e. read data length is 128 bytes), and prefetching data length is 128 bytes. FIG. 5C is an implementation diagram of a data read request carrying a prefetching data length according to an embodiment of the present disclosure. As shown in FIG. 5C, assuming that the prefetched data has been returned to the cache before the next loop, the processing process in different loops is described as follows.

The first loop is loop 0, in which the request source requests 128 bytes (cache block 0) of the start address and 128 bytes (cache block 1) of the prefetching.

In loop 1, the request source requests the cache block 1, and the cache block 1 may be hit in the cache, and is returned to the request source with a shorter delay, and the request source sends a request of prefetching the cache block 2 to the downstream cache or memory;

In loop 2, the request source requests the cache block 2, and the cache block 2 may be hit in the cache, and is returned to the request source with a shorter delay, and the request source sends a request of prefetching the cache block 3 to the downstream cache or memory.

In loop 3, the request source requests the cache block 3, and the cache block 3 may be hit in the cache, and is returned to the request source with a shorter delay, and the loop ends.

It can be seen that in the scenario of continuously fetching data in the memory in the loop, when the pipeline is fully loaded, after the prefetching function is supported, the data requested by each data read request is hit in the cache and returned to the request source with a shorter delay.

An embodiment of the present disclosure provides a chip. FIG. 6 is a schematic diagram of a composition structure of a chip provided by an embodiment of the present disclosure. As shown in FIG. 6, the chip 600 includes a calculation module 610 and a cache 620.

The calculation module 610 is configured to acquire a data read instruction. The data read instruction is used for instructing reading data according to the reading information and prefetching data according to the prefetching information. The calculation module 610 is configured to acquire a first data read request according to the data read instruction, where the first data read request includes the reading information and the prefetching information; send the first data read request to a cache to enable the cache to read and return first target data according to the reading information in response to the first data read request, and prefetch and store a second target data according to the prefetching information; and receive the first target data returned by the cache.

The cache 620 is configured to: receive the first data read request sent by the calculation module, where the first data read request is used to request reading data according to the reading information and prefetching data according to the prefetching information; acquire the reading information and the prefetching information according to the first data read request; based on the reading information, read first target data from a storage space of the cache and/or a memory, and return the first target data to the calculation module; prefetch a second target data from the memory based on the prefetching information, and store the second target data into at least one cache unit of the cache.

The above description of the processor embodiment is similar to the above description of the method embodiment, and has similar beneficial effects as the method embodiment. In some embodiments, the processor provided by the embodiments of the present disclosure has functions or modules that may be configured to perform the methods described in the above-described method embodiments, and for technical details not disclosed in the processor embodiments of the present disclosure, please refer to the description of the method embodiments of the present disclosure for understanding.

An embodiment of the present disclosure provides a computer device including a memory and a processor. The memory stores a computer program executable on the processor, and the program, when executed by the processor, implement some or all of the steps of the above method, or the processor includes the chip described in the above embodiment.

An embodiment of the present disclosure provides a computer-readable storage medium on which a computer program is stored, and the computer program, when executed by a processor, implement some or all of the steps of the above-described method. The computer-readable storage medium may be transitory or non-transitory.

An embodiment of the present disclosure provides a computer program including a computer-readable code, and the computer-readable code, when executed in a computer device, causes a processor in the computer device to execute some or all of the steps for implementing the above-described method.

An embodiment of the present disclosure provides a computer program product including a non-transitory computer-readable storage medium storing a computer program, and the computer program, when read and executed by a computer, implements some or all of the steps of the above method. The computer program product may be implemented in particular by means of hardware, software, or a combination thereof. In some embodiments, the computer program product is embodied as a computer storage medium, and in other embodiments, the computer program product is embodied as a Software product, such as a Software Development Kit (SDK), or the like.

An embodiment of the present disclosure provides a computer program product comprising a computer program or instructions, and the computer program or instructions, when executed by a processor, implement some or all of the steps of the above-described method.

It should be noted here that the above description of the various embodiments tends to emphasize differences between the various embodiments, and regarding the same or similar parts between the various embodiments, reference can be made to each other. The above device, storage medium, computer program, and computer program product embodiments have the similar description to the method embodiments, and have similar benefits as the method embodiments. For technical details not disclosed in the embodiments of the device, storage medium, computer program and computer program product of the present disclosure, please refer to the description of the method embodiments of the present disclosure.

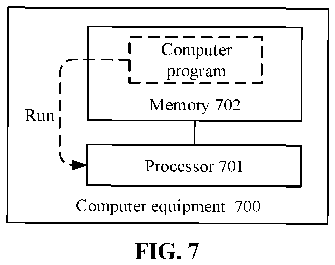

FIG. 7 is a schematic diagram of a hardware entity of a computer device provided by an embodiment of the present disclosure. As shown in FIG. 7, the hardware entity of the computer device 700 includes a processor 701 and a memory 702. The memory 702 stores a computer program executable on the processor 701, and when the processor 701 executes the program, the steps of any of the above method embodiments are implemented.

The memory 702 stores a computer program executable on the processor. The memory 702 is configured to store instructions and applications executable by the processor 701, and can also store data (e.g., image data, audio data, voice communication data, and video communication data) to be processed or already processed by the processor 701 and each module in the computer device 700, and can be implemented by a FLASH Memory (FLASH) or a Random Access Memory (RAM).

When executing the program, the processor 701 implements the steps of any of the above data reading methods. The processor 701 typically controls the overall operation of the computer device 700.

An embodiment of the present disclosure provides a computer storage medium storing one or more programs which are executable by one or more processors to implement the steps of the data reading method of any of the above embodiments.

It should be pointed out here that the above description of the storage medium and device embodiments is similar to the above description of the method embodiments, and has similar beneficial effects as the method embodiments. For technical details not disclosed in the storage medium and device embodiments of the present disclosure, reference is made to the description of the method embodiments of the present disclosure.

The above processor may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a controller, a microcontroller, and a microprocessor. It can be understood that the electronic device that implements the functions of the processor may be other, which is not limited in the embodiment of the present disclosure.

The computer storage medium/memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface Memory, an optical disk, or a Compact Disc Read-Only Memory (CD-ROM) or other memories, and may also include various terminals including one or any combination of the above-mentioned memories, such as a mobile phone, a computer, a tablet device, a personal digital assistant, and the like.

It is to be understood that references "an embodiment" or "the embodiment" throughout the specification mean that a particular feature, structure or characteristic related to the embodiment is included in at least one embodiment of the present disclosure. Accordingly, the references "in an embodiment" or "in one embodiment" appearing throughout the specification do not necessarily refer to the same embodiment. Furthermore, these particular features, structures, or characteristics may be incorporated into one or more embodiments in any suitable manner. It should be understood that in various embodiments of the present disclosure, the sequence numbers of the above-described steps/processes do not mean the order of execution, and the order of execution of each step/process should be determined by its function and internal logic, and should not constitute any limitation on the implementation process of the embodiments of the present disclosure. The above-described sequence numbers of the embodiments of the present disclosure are for description only, and do not represent the advantages and disadvantages of the embodiments.

It should be noted that, the terms "comprise", "include", or any other variation thereof herein are intended to encompass a non-exclusive inclusion such that a process, a method, an article or a device including a series of elements includes not only those elements, but also other elements that are not explicitly listed, or includes elements inherent to such the process, the method, the article or the device. Without further limitation, an element defined by the statement "comprising a..." does not preclude the presence of additional identical elements in the process, the method, the article or the device that includes the elements.

In several embodiments provided by the present disclosure, it should be understood that the disclosed device and method may be implemented in other ways. The device embodiments described above are merely schematic. For example, the division of units is only a logical function division. In actual implementation, there may be other division methods. For example, multiple units or components may be combined, or may be integrated into another system, or some features may be ignored, or may not be implemented. Additionally, the coupling, or the direct coupling or the communicative connection of the components shown or discussed may be indirect coupling or communication connection through some interfaces, devices or units, and may be electrical, mechanical, or otherwise.

The units described above as separate components may or may not be physically separated, and the components displayed as units may or may not be physical units. The components displayed as units may be located in one place or distributed to multiple network elements. Some or all of the units may be selected according to actual needs to achieve the purpose of the present embodiment solution.

In addition, in each embodiment of the present disclosure, the functional units may be all integrated into one processing unit, each unit may be separately used as one unit, or two or more units may be integrated into one unit. The above integrated unit may be implemented either in the form of hardware or in the form of a combination of hardware and software functional units. Those skilled in the art will understand that all or part of the steps for implementing the above-described method embodiments may be completed by instructing the hardware by the program, and the aforementioned program may be stored in a computer-readable storage medium, and when the program is executed, the program implements the steps including the above-described method embodiments. The aforementioned storage medium includes various media capable of storing program codes, such as a removable storage device, a read only memory (ROM), a magnetic disk, an optical disk or the like.

Alternatively, if the above integrated unit of the present disclosure is implemented in the form of a software function module and sold or used as an independent product, the integrated unit may be stored in a computer-readable storage medium. Based on such understanding, the technical solution of the present disclosure essentially or a part of the technical solution that contributes to the prior art may be embodied in the form of a software product, the computer software product is stored in a storage medium, and includes several instructions for causing a computer device (which may be a personal computer, a server, or a network device, etc.) to perform all or a part of the method described in various embodiments of the present disclosure. The aforementioned storage medium includes various media capable of storing program codes, such as a removable storage device, a ROM, a magnetic disk, an optical disk, or the like.

The above description is merely the embodiments of the present disclosure, but the scope of protection of the present disclosure is not limited thereto, and any changes or substitutions that may be easily conceived by those skilled in the art within the technical scope of the present disclosure should be covered within the scope of protection of the present disclosure.

### INDUSTRIAL APPLICABILITY

The embodiments of the present disclosure disclose a data reading method for a chip, a chip, a computer device, a storage medium and a computer program product. The method includes: acquiring a data read instruction, where the data read instruction is used for indicating reading data according to reading information and prefetching data according to prefetching information; acquiring a first data read request according to the data read instruction, where the first data read request includes the reading information and the prefetching information; sending the first data read request to the cache to enable the cache to, in response to the first data read request, read and return first target data according to the reading information and prefetch and store the second target data according to the prefetching information; receiving the first target data returned by the cache. According to the embodiment of the present disclosure, the data request pressure between the request source and the cache can be reduced, the request bandwidth can be compressed, the processor performance can be improved, and the prefetching mode can be flexibly controlled per task, so as to meet the data reading requirement of each task.

## Claims

1. A data reading method for a chip, comprising:
acquiring a data read instruction, wherein the data read instruction indicates reading data according to reading information and prefetching data according to prefetching information;
acquiring a first data read request according to the data read instruction, the first data read request comprising the reading information and the prefetching information;
sending the first data read request to a cache to enable the cache to, in response to the first data read request, read and return first target data according to the reading information and prefetch and store a second target data according to the prefetching information; and
receiving the first target data returned by the cache.

2. The data reading method of claim 1, wherein the reading information comprises a first read request address and a first read data length, and the acquiring the data read instruction comprises:
performing instruction encoding according to the first read request address, the first read data length and the prefetching information to obtain the data read instruction.

3. The data reading method of claim 2, wherein the data read instruction comprises an instruction type code, a read request address code and a read data length code,
wherein the performing instruction encoding according to the first read request address, the first read data length and the prefetching information to obtain the data read instruction comprises:
determining the instruction type code corresponding to the prefetching information from a preset instruction type code set;
encoding the first read request address to obtain the read request address code; and
encoding the first read data length to obtain the read data length code.

4. The data reading method of claim 3, wherein the acquiring a first data read request according to the data read instruction comprises:
parsing the instruction type code, the read request address code and the read data length code respectively to obtain the prefetching information, the first read request address and the first read data length; and
generating the first data read request according to the prefetching information, the first read request address and the first read data length.

5. The data reading method of claim 2, wherein the read data instruction comprises a read request address code, a read data length code, and a prefetching control code,
wherein the performing instruction encoding according to the first read request address, the first read data length and the prefetching information to obtain the data read instruction comprises:
encoding the first read request address to obtain the read request address code;
encoding the first read data length to obtain the read data length code; and
encoding the prefetching information to obtain the prefetching control code.

6. The data reading method of claim 5, wherein the acquiring the first data read request according to the data read instruction comprises:
parsing the read request address code, the read data length code and the prefetching control code respectively to obtain the first read request address, the first read data length and the prefetching information; and
generating the first data read request according to the prefetching information, the first read request address and the first read data length.

7. The data reading method of claim 4 or 6, wherein the generating the first data read request according to the prefetching information, the first read request address and the first read data length comprises one of:
determining a read request address signal, a read data length signal and a request type signal according to the first read request address, the first read data length and the prefetching information, respectively, and generating the first data read request according to the read request address signal, the read data length signal and the request type signal; or
determining a read request address signal, a read data length signal and a prefetching control signal according to the first read request address, the first read data length and the prefetching information, respectively, and generating the first data read request according to the read request address signal, the read data length signal and the prefetching control signal.

8. The data reading method of any one of claims 1 to 6, wherein the acquiring the data read instruction comprises:
acquiring an amount of read data and an estimated calculation time length of a current task;
determining the prefetching information according to the amount of read data and the estimated calculation time length; and
determining the data read instruction based on the prefetching information.

9. The data reading method of claim 8, wherein the determining the prefetching information according to the amount of read data and the estimated calculation time length comprises:
determining a first estimated read time length corresponding to the amount of read data when a data prefetching function is turned on, and a second estimated read time length corresponding to the amount of read data when the data prefetching function is turned off; and
determining the prefetching information according to a magnitude relationship between the estimated calculation time length and the first estimated read time length and/or a magnitude relationship between the estimated calculation time length and the second estimated read time length.

10. The data reading method of claim 9, wherein the determining the prefetching information according to a magnitude relationship between the estimated calculation time length and the first estimated read time length and/or a magnitude relationship between the estimated calculation time length and the second estimated read time length comprises:
in a case that the estimated calculation time length is greater than the first estimated read time length and less than the second estimated read time length, determining that the prefetching information is first prefetching information characterizing that the data prefetching function is turned on.

11. The data reading method of claim 9 or 10, wherein the determining a first estimated read time length corresponding to the amount of read data when a data prefetching function is turned on, and a second estimated read time length corresponding to the amount of read data when the data prefetching function is turned off comprises:
estimating a time delay for sending a single request to the cache, a time delay for returning a single data by the cache, a time delay for sending a single request by the cache to a memory, and a time delay for returning a single data by the memory to the cache to obtain a first estimated time delay, a second estimated time delay, a third estimated time delay and a fourth estimated time delay, respectively;
determining a sum of a first ratio between the amount of read data of the current task and a target bandwidth, the first estimated time delay, and the second estimated time delay as the first estimated read time length, wherein the target bandwidth is a data bandwidth between a request source of the first data read request and the cache; and
determining a sum of the first ratio, the first estimated time delay, the second estimated time delay, the third estimated time delay, and the fourth estimated time delay as the second estimated read time length.

12. A data reading method for a chip, comprising:
receiving a first data read request sent by a request source, wherein the first data read request requests reading data according to reading information and prefetching data according to prefetching information;
acquiring the reading information and the prefetching information according to the first data read request;
based on the reading information, reading first target data from a storage space of the cache and/or a memory and returning the first target data to the request source;
based on the prefetching information, prefetching a second target data from the memory, and storing the second target data into at least one cache unit of the cache.

13. The data reading method of claim 12, wherein the prefetching information comprises a prefetching data length,
wherein the prefetching a second target data from the memory and storing the second target data into at least one cache unit of the cache based on the prefetching information comprises:
in a case that the prefetching data length is greater than 0, determining a prefetching start address based on a first read request address and a first read data length; and
prefetching a second target data from the memory based on the prefetching start address and the prefetching data length, and storing the second target data into at least one cache unit of the cache.

14. The data reading method of claim 13, wherein the reading information comprises the first read request address and the first read data length,
wherein the acquiring the reading information and the prefetching information according to the first data read request comprises one of:
respectively parsing a request type signal, a read request address signal and a read data length signal in the first data read request to obtain a first request type, the first read request address and the first read data length, and determining the prefetching data length based on the first request type; and
respectively parsing a read request address signal, a read data length signal and a prefetching control signal in the first data read request to obtain the first read request address, the first read data length and the prefetching data length.

15. The data reading method of claim 13 or 14, wherein the prefetching a second target data from the memory based on the prefetching start address and the prefetching data length, and storing the second target data into at least one cache unit of the cache comprises:
determining at least one prefetching sub-request based on the prefetching start address and the prefetching data length, wherein a data request length corresponding to each of the prefetching sub-requests is equal to a cache unit length of the cache;
for each of the prefetching sub-requests, performing cache unit hit detection in a storage space of the cache based on the prefetch sub-request to obtain a first detection result, and in a case that the first detection result indicates that the cache unit corresponding to the prefetching sub-request is missing, prefetching a second target data from the memory based on the prefetching sub-request, and storing the second target data into at least one cache unit of the cache.

16. The data reading method of any one of claims 13 to 15, wherein the prefetching data length is an integer multiple of a cache unit length, the cache unit includes a cache block or a cache sector.

17. The data reading method of any one of claims 12 to 16, wherein a number of first data read requests is more than one, and the reading information comprises a first read request address and a first read data length,
wherein the reading first target data from a storage space of the cache and/or a memory based on the reading information comprises:
for each of the first data read requests, determining a cache unit corresponding to the first data read request based on the first read request address and the first read data length corresponding to the first data read request;
in a case that the cache units respectively corresponding to the plurality of first data read requests overlap, respectively merging the first read request addresses and the first read data length corresponding to the plurality of first data read requests to obtain the merged first read request address and the merged first read data length, and merging the prefetching information corresponding to the plurality of first data read requests to obtain the merged prefetching information; and
acquiring first target data from a storage space of the cache and/or a memory based on the merged first read request address and the merged first read data length,
wherein the prefetching a second target data from the memory based on the prefetching information and storing the second target data into at least one cache unit of the cache comprises:
prefetching a second target data from the memory based on the merged prefetching information, and storing the second target data into at least one cache unit of the cache.

18. The data reading method of claim 17, wherein the merging the prefetching information corresponding to the plurality of first data read requests to obtain the merged prefetching information comprises:
determining the prefetching information corresponding to the first data read request with a last first read request address among the plurality of first data read requests as the merged prefetching information.

19. The data reading method of any one of claims 12 to 18, wherein the first target data comprises at least one first target sub-data, and the cache comprises a first cache sub-module and a second cache sub-module,
wherein the receiving the first data read request sent by the request source comprises: receiving, by the first cache sub-module, the first data read request sent by the request source,
wherein the acquiring the reading information and the prefetching information according to the first data read request comprises: acquiring, by the first cache sub-module, the reading information and the prefetching information according to the first data read request, wherein the reading information comprises a first read request address and a first read data length,
wherein the reading first target data from a storage space of a cache and/or a memory and returning the first target data to the request source based on the reading information comprises: determining, by the first cache sub-module, at least one data read sub-request based on the first read request address and the first read data length, wherein the data request length corresponding to each of the data read sub-request is equal to a cache unit length of the first cache sub-module; acquiring, by the first cache sub-module, respective first target sub-data corresponding to each of the data read sub-requests from a storage space of the first cache sub-module, a storage space of the second cache sub-module and/or a memory, and returning the first sub-target data to the respective request source, and
prefetching a second target data from the memory and storing the second target data into at least one cache unit of the cache based on the prefetching information comprises: prefetching, by the second cache sub-module, a second target data from the memory based on the prefetching information and storing the second target data into at least one cache unit of the second cache sub-module.

20. The data reading method of claim 19, wherein the acquiring, by the first cache sub-module, respective first target sub-data corresponding to each of the data read sub-requests from a storage space of the first cache sub-module, a storage space of the second cache sub-module and/or a memory comprises:
for each of the read data sub-requests, performing, by the first cache sub-module, cache unit hit detection in a storage space of the first cache sub-module based on the read data sub-request, to obtain a second detection result corresponding to the read data sub-request;
for each of the read data sub-requests, reading, by the first cache sub-module, first target sub-data corresponding to the data read sub-request from the hit cache unit in a case that the second detection result corresponding to the data read sub-request indicates that the cache unit corresponding to the data read sub-request is hit, and sending a second data read request to the second cache sub-module based on the second read request address, the second read data length and the prefetching information corresponding to the data read sub-request in a case that the second detection result corresponding to the data read sub-request indicates that the cache unit corresponding to the data read sub-request is missing, and receiving the first target sub-data corresponding to the data read sub-request returned by the second cache sub-module,
wherein the prefetching, by the second cache sub-module, a second target data from the memory based on the prefetching information comprises:
parsing, by the second cache sub-module, a second data read request in response to receiving the second data read request sent by the first cache sub-module, to obtain a second read request address, a second read data length and the prefetching information;
acquiring, by the second cache sub-module, first target sub-data from a storage space of the second cache sub-module and/or a memory based on the second read request address and the second read data length, and returning the first target sub-data to the first cache sub-module; and
prefetching, by the second cache sub-module, a second target data from the memory based on the prefetching information, and storing the second target data into at least one cache unit of the second cache sub-module.

21. A chip comprising:
a calculation module configured to: acquire a data read instruction, wherein the data read instruction indicates reading data according to reading information and prefetching data according to prefetching information; acquire a first data read request according to the data read instruction, the first data read request comprising the reading information and the prefetching information; send the first data read request to a cache to enable the cache to, in response to the first data read request, read and return first target data according to the reading information and prefetch and store a second target data according to the prefetching information; and receive the first target data returned by the cache; and
a cache configured to: receive a first data read request sent by the calculation module, wherein the first data read request requests reading data according to reading information and prefetching data according to prefetching information; acquire the reading information and the prefetching information according to the first data read request; read first target data from a storage space of the cache and/or a memory and return the first target data to the calculation module based on the reading information; and prefetch a second target data from the memory and store the second target data into at least one cache unit of the cache based on the prefetching information.

22. A computer device comprising a memory and a processor, the memory storing a computer program executable on the processor, wherein the computer program, when executed by the processor, implements the steps of the method of any one of claims 1 to 20, or the processor comprises the chip of claim 21.

23. A computer-readable storage medium having stored thereon a computer program that, when executed by a processor, implements the steps of the method of any one of claims 1 to 20.

24. A computer program product comprising a computer program or instructions that, when executed by a processor, implement the steps in the method of any one of claims 1 to 20.
